# EUROPÄISCHE PATENTSCHRIFT

(11) **EP 1 789 190 B1**
(45) Veröffentlichungstag und Bekanntmachung des Hinweises auf die Patenterteilung: **14.06.2017**
(21) Anmeldenummer: 05771914.8
(22) Anmeldetag: 13.08.2005
(51) Int. Cl.: B01J 37/02, B01D 46/24

(54) **VERFAHREN ZUR BESCHICHTUNG EINES WANDFLUSSFILTERS MIT EINER BESCHICHTUNGSZUSAMMENSETZUNG**
METHOD FOR COATING A WALL FLOW FILTER WITH A COATING COMPOSITION
PROCEDE POUR REVETIR UN FILTRE A ECOULEMENT SUR PAROI D'UNE COMPOSITION DE REVETEMENT

(30) Priorität: 21.08.2004 DE 102004040551
(43) Veröffentlichungstag der Anmeldung: 30.05.2007
(73) Patentinhaber: Umicore AG & Co. KG, 63457 Hanau-Wolfgang (DE)
(72) Erfinder: MERGNER, Bernd, 79618 Rheinfelden (DE); HASSELMANN, Wolfgang, 79618 Rheinfelden (DE)
(74) Vertreter: Herrmann, Reinhard
(86) Internationale Anmeldenummer: PCT/EP2005/008826
(87) Internationale Veröffentlichungsnummer: WO 2006/021339

(56) Entgegenhaltungen:
- WO-A-99/47260
- WO-A-99/55459
- JP-A- 2002 066 338
- JP-A- 2004 073 945
- US-A- 4 039 482
- US-A- 4 550 034
- US-A- 5 422 138
- US-B1- 6 478 874
- US-B1- 6 627 257
- US-B1- 6 753 294

## Beschreibung

Die Erfindung betrifft ein Verfahren zum Beschichten eines als Wandflußfilter ausgebildeten Partikelfilters mit einer Beschichtungszusammensetzung. Insbesondere betrifft die Erfindung ein Verfahren zum Beschichten eines solchen Filters für ein Abgasreinigungssystem eines Dieselmotors mit einer katalytisch aktiven Beschichtung.

Sogenannte Wandflußfilter werden im zunehmenden Maße für die Entfernung von Ruß aus dem Abgas von Dieselmotoren eingesetzt. Sie besitzen in der Regel eine zylindrische Form mit zwei Stirnflächen und einer Mantelfläche und werden von der ersten Stirnfläche zur zweiten Stirnfläche von einer Vielzahl von im wesentlichen parallel zur Zylinderachse liegenden Strömungskanälen für die Abgase der Dieselmotoren durchzogen. Die Querschnittsform der Wandflußfilter hängt von den Einbauerfordernissen am Kraftfahrzeug ab. Weit verbreitet sind Filterkörper mit rundem Querschnitt, elliptischem oder dreieckförmigem Querschnitt. Die Strömungskanäle weisen meist einen quadratischen Querschnitt auf und sind in einem engen Raster über den gesamten Querschnitt der Filterkörper angeordnet. Je nach Anwendungsfall variiert die Kanalbeziehungsweise Zelldichte der Strömungskanäle zwischen 10 und 140 cm⁻². Die Dicke der Kanalwände zwischen zwei benachbarten Strömungskanälen beträgt typischerweise je nach Zelldichte 0,1 bis 0,3 mm.

Zur Ausbildung der Filterwirkung sind die Strömungskanäle wechselseitig an der ersten und zweiten Stirnfläche verschlossen. Entsprechend der Anordnung des Filters im Abgasstrom des Dieselmotors bildet eine Stirnfläche die Eintrittsstirnfläche und die zweite Stirnfläche die Austrittsstirnfläche für das Abgas. Die an der Eintrittsseite offenen Strömungskanäle bilden die Eintrittskanäle und die an der Austrittsseite offenen Strömungskanäle bilden die Austrittskanäle. Ein- und Austrittskanäle sind abwechselnd benachbart und werden durch die Kanalwände zwischen ihnen voneinander getrennt.

Bei seinem Weg durch das Filter muß das Abgas von den Eintrittskanälen durch die Kanalwände zwischen Ein- und Austrittskanälen hindurch in die Austrittskanäle des Filters hinüberwechseln. Zu diesem Zweck weist das Material, aus welchem die Wandflußfilter aufgebaut sind, eine offenporige Porosität auf. Beim Durchtritt durch die Kanalwände werden die im Abgas enthaltenen Rußpartikel herausgefiltert und im wesentlichen auf den Kanalwänden der Eintrittskanäle abgelagert.

Durch die Ablagerung des Rußes erhöht sich der Abgasgegendruck des Filters stetig und vermindert die Leistungsfähigkeit des Motors. Das Filter muß daher durch Abbrennen des Rußes von Zeit zu Zeit regeneriert werden. Zur Unterstützung dieser Maßnahme ist es bekannt, daß Filter mit einer sogenannte Rußzündbeschichtung zu beschichten. Darüber hinaus kann das Filter auch mit anderen Katalysatoren beschichtet werden.

Zur Beschichtung eines Filters mit einer katalytisch aktiven Beschichtung kann das Filter gemäß der deutschen Offenlegungsschrift DE 32 32 729 A1 (entsprechend US 4,515,758) zum Beispiel mit einer Lösung von Vorstufen der gewünschten Beschichtungsmaterialien imprägniert und anschließend getrocknet werden. Alternativ kann das Filter auch mit einer Aufschlämmung feinteiliger Katalysatormaterialien von einer Seite her übergossen getrocknet und calciniert werden. Die Aufschlämmung kann zusätzlich gelöste Vorstufen von katalytisch aktiven Komponenten enthalten.

Die US-Patentschrift US 4,759,918 beschreibt ein Verfahren zur Verminderung der Zündtemperatur von Dieselruß. Zu diesem Zweck wird ein Wandflußfilter mit einem schwefelresistenten anorganischen Oxid ausgewählt aus Titanoxid, Zirkonoxid, Siliciumdioxid, Aluminiumsilicat und Aluminiumoxid beschichtet. Außerdem enthält das Wandflußfilter noch wenigstens ein katalytisch aktives Element aus der Gruppe Platin, Palladium und Rhodium. Diese Schrift macht keine Angaben über ein Verfahren zur Beschichtung der Wandflußfilter. In den Beispielen werden zur Vereinfachung der Messungen lediglich konventionelle Durchfluß-Wabenkörper durch Eintauchen in eine entsprechende Beschichtungszusammensetzung mit den katalytischen Beschichtungen versehen.

Die US 5,492,679 beschreibt ein Wandflußfilter, dessen Wände der Eintrittskanäle mit einer Adsorberbeschichtung aus Zeolithen für Kohlenwasserstoffe beschichtet sind, während auf den Wänden der Austrittskanäle ein Oxidationskatalysator aufgebracht ist. In der Patentschrift finden sich keine Angaben darüber, wie die Beschichtung vorgenommen werden soll.

Diese Beispiele zeigen, daß zur Reinigung der Abgase von Dieselmotoren zunehmend katalytisch beschichtete Wandflußfilter in Betracht gezogen werden. Es gibt jedoch offensichtlich noch kein technisch ausgereiftes Beschichtungsverfahren für diese Filter, welches es gestatteten würde, die Filter in großen Stückzahlen reproduzierbar zu beschichten.

Für die Beschichtung von sogenannten Durchfluß-Wabenkörpern, oder kurz Wabenkörper, wie sie in großen Stückzahlen in der Automobilindustrie zur Abgasreinigung eingesetzt werden, sind dagegen Beschichtungsverfahren bekannt geworden, die eine Beschichtung der Wabenkörper in großen Stückzahlen ermöglichen. Ein Beispiel hierfür ist das in der US-Patentschrift US 4,550,034 beschriebene Verfahren. Danach wird eine vorgewogene Menge der Beschichtungszusammensetzung in eine Schale mit flachem Boden eingefüllt. Anschließend wird der zu beschichtende Wabenkörper mit seinem unteren Ende teilweise in die Beschichtungszusammensetzung eingetaucht und die gesamte Menge der Beschichtungszusammensetzung durch einen an das obere Ende des Wabenkörpers angelegten Unterdruck in die Durchgangskanäle des Wabenkörpers eingesaugt. Die WO 99/55459 A offenbart ein Beschichtungsverfahren für Durchfluss- und Wandfluss-Monolithe. Dabei erfolgt die Beschichtung auf der Oberfläche des Wabenkörpers und nicht in den Poren. Die JP 2002 066338 A beschreibt die Beschichtung eines Wandflussfilters, wobei die Lösung der Katalysatorsuspension durch die Filterwand durchgezogen wird. Da die Katalysator-Partikel jedoch grösser sind als die mittlere Porengrösse, lagern diese sich auf der Oberfläche des Wandflussfilters und nicht in den Poren der Wände ab. Ein wesentliches Kriterium eines Beschichtungsverfahrens ist die mit ihm in einem Arbeitsgang erreichbare Beschichtungs- oder Beladungskonzentration. Hierunter wird der Feststoffanteil verstanden, der nach Trocknen und Calcinieren auf dem Wabenkörper zurückbleibt. Die Beschichtungskonzentration wird in Gramm pro Liter Volumen der Tragkörper angegeben (g/l). In der Praxis werden Beschichtungskonzentrationen bei Autoabgaskatalysatoren bis zu 300 g/l benötigt. Kann diese Menge mit dem verwendeten Verfahren nicht in einem Arbeitsgang aufgebracht werden, so muß der Beschichtungsvorgang nach dem Trocknen und gegebenenfalls Calcinieren des Wabenkörpers so oft wiederholt werden, bis die gewünschte Beladung erreicht ist. Häufig werden zwei oder mehrere Beschichtungsvorgänge mit unterschiedlich zusammengesetzten Beschichtungszusammensetzungen vorgenommen. Hierdurch werden Katalysatoren erhalten, die mehrere übereinanderliegende Schichten mit unterschiedlichen katalytischen Funktionen aufweisen.

Das beschriebene Beschichtungsverfahren wurde für die Beschichtung von Durchfluß-Wabenkörpern entwickelt. Wie schon oben festgestellt wurde, gibt es dagegen für Wandflußfilter noch kein technisch ausgereiftes Verfahren. Aufgabe der vorliegenden Erfindung ist es daher ein solches Verfahren zur Verfügung zu stellen.

Diese Aufgabe wird durch ein Verfahren mit den Verfahrensschritten des unabhängigen Anspruchs gelöst. Je nach gewünschtem Beschichtungsergebnis kann das Partikelfilter bei der Beschichtung so ausgerichtet werden, daß die Eintritts- oder die Austrittsstirnfläche die untere Stirnfläche bildet.

Die Erfindung wird an Hand der Figuren näher erläutert. Es zeigen
- **Figur 1:**: Querschnitt durch ein Wandflußfilter
- **Figur 2:**: Apparatur zur Beschichtung des Wandflußfilters

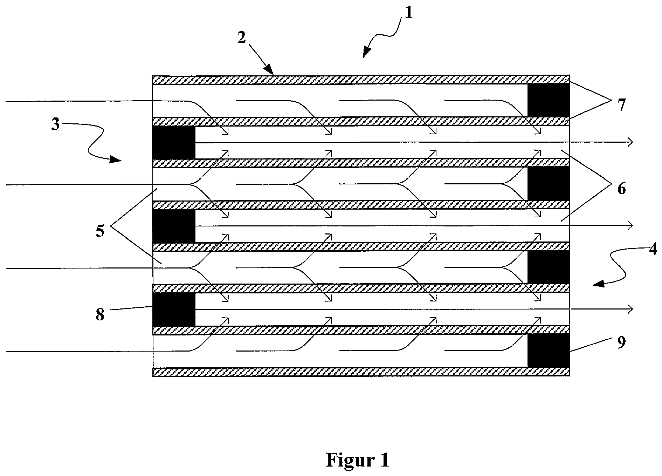

Figur 1 zeigt schematisch einen Längsschnitt durch ein Wandflußfilter (1). Das Filter besitzt eine zylindrische Form mit einer Mantelfläche (2), einer Eintrittsstirnfläche (3) und einer Austrittsstirnfläche (4). Das Filter weist über seinen Querschnitt Strömungskanäle (5) und (6) für das Abgas auf, die durch die Kanalwände (7) voneinander getrennt sind. Die Strömungskanäle sind durch gasdichte Stopfen (8) und (9) wechselseitig an der Ein- und Austrittsstirnfläche verstopft. Die an der Eintrittsseite offenen Strömungskanäle (5) bilden die Eintrittskanäle und die an der Austrittsseite offenen Strömungskanäle (6) bilden die Austrittskanäle für das Abgas. Das zu reinigende Abgas tritt in die Eintrittskanäle des Filters ein und muß zum Durchqueren des Filters von den Eintrittskanälen durch die porösen Kanalwände (7) hindurch in die Austrittskanäle übertreten.

Die Untersuchungen der Erfinder zeigten, daß Wandflußfilter der in Figur 1 gezeigten Art überraschenderweise mit einem dem in der US 4,550,034 ähnlichen Verfahren beschichtet werden können, obwohl dies wegen der anders gearteten Wirkung des angelegten Unterdruckes nicht zu erwarten gewesen war. Der Unterdruck wird erfindungsgemäß an die Öffnungen der Austrittskanäle angelegt, während die Beschichtungszusammensetzung durch die Öffnungen der Eintrittskanäle in das Wandflußfilter eingesaugt wird. Abhängig von der Art der Beschichtungszusammensetzung erfolgt dabei durch die Filterwirkung eine mehr oder weniger starke Trennung der Bestandteile der Beschichtungszusammensetzung. Der Unterdruck muß bei der Durchführung des Verfahrens nicht an jede Öffnung der Austrittskanäle separat angelegt werden, sondern es genügt, wenn der Unterdruck auf die gesamte obere Stirnfläche des Wandflußfilters wirkt. Die Stopfen der Eintrittskanäle an der oberen Stirnfläche sind nahezu undurchlässig, so daß der Unterdruck nur durch die Öffnungen der Austrittskanäle wirksam werden kann.

Mit dem beschriebenen Verfahren können alle heute gängigen Wandflußfilter beschichtet werden, genannt seien hier beispielsweise Wandflußfilter aus Cordierit, Siliciumcarbid oder Aluminiumtitanat. Diese Filter weisen Zelldichten (Anzahl der Ein- und Austrittskanäle pro Querschnittsfläche des Filters) zwischen 31 und 93 cm⁻² mit Wandstärken der Kanalwände zwischen 0,3 und 0,1 mm. Die Porosität dieser Filter kann zwischen 30 und 95 % liegen, wobei die mittleren Porendurchmessern zwischen 10 und 50 µm betragen. Bevorzugt liegt die Porosität zwischen 45 und 90 %. Demgegenüber liegt die Porosität konventioneller, keramischer Durchfluß-Wabenkörper mit etwa 30 % am unteren Ende des Porositätsbereichs von Wandflußfiltern. Noch deutlicher ist der Unterschied beim mittleren Porendurchmesser, der bei konventionellen Durchfluß-Wabenkörpern nur bei etwa 4 bis 5 µm liegt.

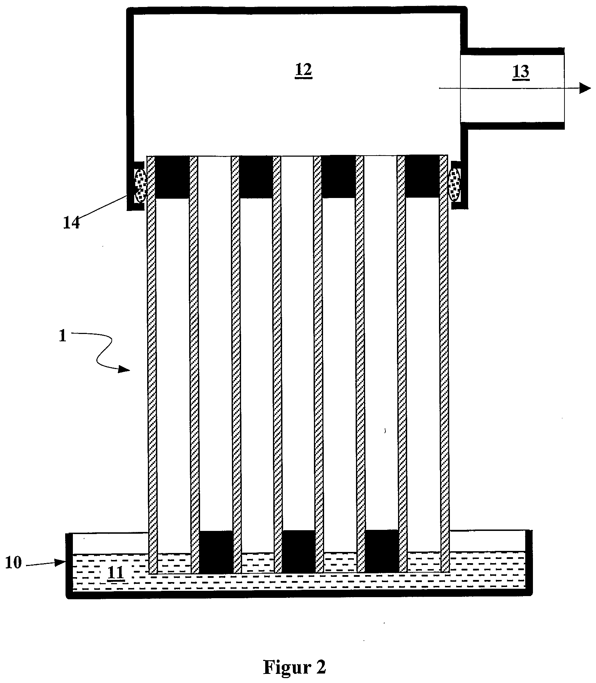

Figur 2 zeigt eine mögliche Ausführungsform einer Apparatur zur erfindungsgemäßen Beschichtung des Wandflußfilters (1). In eine Schale (10 mit flachem Boden wird eine definierte Menge der Beschichtungszusammensetzung (11) gegeben. Der Durchmesser der Schale entspricht mindestens der größten Querschnittsabmessung des Wandflußfilters. Das Wandflußfilter wird so tief in die Beschichtungszusammensetzung eingetaucht, daß der verbleibende Spalt zwischen der unteren Stirnfläche und dem Boden der Schale zwischen 0,5 und 2 mm beträgt. Zum Hochsaugen der Beschichtungszusammensetzung wird auf die obere Stirnfläche eine Abzugshaube (12) aufgesetzt und gegen die Mantelfläche des Filters mittels einer gegebenenfalls aufblasbaren Gummidichtung (14) abgedichtet. Über Absaugstutzen (13) wird Unterdruck an die Abzugshaube angelegt und die Beschichtungszusammensetzung in die unten offenen Strömungskanäle des Filters eingesaugt. Dabei tritt die Beschichtungszusammensetzung durch die porösen Kanalwände hindurch auch in die unten geschlossenen und oben offenen Strömungskanäle über.

Der für das Hochsaugen der Beschichtungszusammensetzung an die obere Stirnfläche angelegte Unterdruck wird vorteilhafterweise mit zunehmender Absaugzeit von einem niedrigen Wert beginnend erhöht. Die Erhöhung des angelegten Unterdruckes kann zum Beispiel in zwei zeitlich aufeinanderfolgenden Stufen erfolgen, wobei der Unterdruck in der zweiten Stufe höher als in der ersten Stufe ist. Bevorzugt wird der Unterdruck in der ersten Stufe auf einen Wert zwischen 100 und 200 Pa eingestellt und in der zweiten Stufe auf 500 bis 5000 Pa erhöht. Die Absaugzeit für die erste Stufe kann zwischen 1 und 10 Sekunden und für die zweite Stufe zwischen 10 und 50 Sekunden gewählt werden.

Nach erfolgter Beschichtung wird das Wandflußfilter bei erhöhter Temperatur getrocknet und danach bei einer Temperatur zwischen 300 und 600 °C calciniert.

Bei der Beschichtungszusammensetzung kann es sich um eine Aufschlämmung feinteiliger Feststoffe, um eine kolloide Lösung oder um eine Lösung von löslichen Vorstufen der späteren Beschichtungsmaterialien handeln, die erst durch die abschließende Calcinierung in die Beschichtungsmaterialien überführt werden. Auch Mischformen dieser drei Beschichtungszusammensetzungen sind möglich.

Als feinteilige Feststoffe werden im Rahmen dieser Erfindung pulverförmige Stoffe mit Partikeldurchmessern zwischen 1 und 50 µm verstanden, die eine spezifische Oberfläche zwischen 10 und 400 m²/g aufweisen. Solche Materialien werden in der Katalyse als Trägermaterialien für katalytisch aktive Edelmetalle aus der Gruppe der Platingruppenmetalle verwendet. Dementsprechend können auch die hier eingesetzten feinteiligen Feststoffe mit wenigstens einem Platingruppenmetall katalytisch aktiviert sein.

Im Rahmen dieser Erfindung beinhaltet der Begriff "feinteilige Feststoffe" also insbesondere die in der Katalyse üblichen Trägermaterialien für katalytisch aktive Komponenten wie zum Beispiel die Edelmetalle der Platingruppe sowie auch schon mit diesen Komponenten belegte Trägermaterialien.

Vor der Beschichtung werden die Feststoffe der Beschichtungszusammensetzung gewöhnlich auf eine mittlere Partikelgröße d₅₀ zwischen 2 und 4 µm vermahlen. Die Bezeichnung d₅₀ bedeutet, daß das Volumen der Partikel mit Teilchengrößen unterhalb von d₅₀ sich zu 50 % des Volumens aller Partikel addiert. Obwohl die Partikelgröße von 2 bis 4 µm wesentlich kleiner ist als die mittlere Porengröße des Wandflußfilters übt dieses beim Beschichtungsvorgang schon eine deutliche Filterwirkung auf die in der Beschichtungszusammensetzung enthaltenen Feststoffe auf. Der größte Teil dieser Stoffe lagert sich daher auf den äußeren, geometrischen Oberflächen der Wände der Eintrittskanäle ab. Nur ein kleinerer Teil dringt in die Poren ein und beschichtet dort die inneren Oberflächen der Poren. Eine Ursache hierfür ist wahrscheinlich die Tatsache, daß die Porenöffnungen in den Kanalwänden wesentlich kleiner als die Porendurchmesser selbst sind und daher schon durch relativ kleine Partikel verschlossen werden können.

Das Massenverhältnis der in die Poren der Wandflußfilter eingelagerten Feststoffpartikel zu den auf der geometrischen Oberfläche des Filters abgelagerten Feststoffpartikel kann durch den Mahlvorgang beeinflußt werden. Bei der Beschichtung von konventionellen Durchfluß-Wabenlcörpern wird die Beschichtungszusammensetzung gewöhnlich auf eine mittlere Partikelgröße von 2 bis 4 µm vermahlen. Diese mittlere Partikelgröße garantiert eine gute Haftfestigkeit der Partikel auf den geometrischen Oberflächen der Wabenkörper. Wird die mittlere Partikelgröße durch Mahlen unter einen Wert von 2 bis 4 µm verringert, so vermindert sich erfahrungsgemäß die Haftfestigkeit auf den geometrischen Oberflächen der Wabenkörper und führt zum Abplatzen der Beschichtung. Im vorliegenden Fall der Beschichtung von Wandflußfiltern gilt dies nicht. Hier kann es sogar erwünscht sein, die Beschichtungszusammensetzung besonders fein zu vermahlen, um einen möglichst hohen Anteil der Partikel in die Poren des Filters einzulagern. Die Gefahr des Abplatzens der Beschichtung ist hier nicht gegeben, da die besonders feinen Partikel in den Poren gesichert sind.

Neben den feinteiligen Feststoffen kann die Beschichtungszusammensetzung zusätzlich lösliche Vorstufen weiterer katalytisch aktiver Komponenten enthalten, die bei der abschließenden Trocknung und Calcinierung der Beschichtung bei Temperaturen zwischen 300 und 600 °C in ihre endgültige Form überführt werden.

Besonders vorteilhaft können mit dem Beschichtungsverfahren auch kolloide Lösungen als Beschichtungszusammensetzung verwendet werden. Kolloide Lösungen enthalten sogenannte Sole. Dabei handelt es sich um vorgeformte Feststoffe mit einem Partikeldurchmesser von weniger als 1 µm, bevorzugt weniger als 0,5 µm. Nahezu alle bekannten katalytischen Trägermaterialien stehen auch als solche Sole zur Verfügung.

Wird eine solche kolloide Lösung als Beschichtungszusammensetzung eingesetzt, so wird der größte Teil des kolloiden Materials in die Poren des Wandflußfilters eingelagert. Nur der geringere Teil liegt als Beschichtung auf den geometrischen Wandflächen der Ein- und Austrittskanäle vor.

Interessante Beschichtungsvarianten ergeben sich, wenn die Beschichtungszusammensetzung zwei Materialien mit unterschiedlichen katalytischen Funktionen verwendet werden, wobei das eine Material eine mittlere Korngröße aufweist, die eine Einlagerung diese Materials in die Poren des Wandflußfilters gewährleistet, während das zweite Material eine mittlere Korngröße aufweist, die im wesentlichen ein Eindringen dieses Materials in die Poren des Filters verhindert. Aus beiden Materialien kann eine gemeinsame Beschichtungszusammensetzung hergestellt werden. Aufgrund der unterschiedlichen Korngrößen wird dann beim Beschichtungsvorgang das Material mit der geringen Korngröße im wesentlichen in die Poren des Filters eingelagert, während das gröbere Material sich im wesentlichen auf den Kanalwänden der bei der Beschichtung die Eintrittskanäle bildenden Strömungskanäle ablagert.

Insbesondere kann die Beschichtungszusammensetzung eine Mischung aus einer Aufschlämmung feinteiliger Feststoffe und einer kolloiden Lösung sein. Die Beschichtungszusammensetzung weist dann eine mehrmodale Verteilung der Korngrößen mit wenigstens einem Maximum der Korngrößenverteilung unterhalb von 1 µm und einem zweiten Maximum oberhalb von 1 µm auf.

Bei einer weiteren Ausführungsform des Verfahrens ist vorgesehen, eine wäßrige Lösung von Vorstufen der späteren Beschichtungsmaterialien als Beschichtungszusammensetzung zu verwenden. Die Vorstufen werden im Anschluß an die Beschichtung durch Trocknen und Calcinieren in die eigentlichen Beschichtungsmaterialien überführt. Bei dieser Imprägnierung des Wandflußfilters wird das Beschichtungsmaterial ähnlich wie bei Verwendung einer kolloiden Lösung im wesentlichen in den Poren des Wandflußfilters abgeschieden.

Mit dem Verfahren können in einem Arbeitsgang Beschichtungskonzentrationen von 100 g/l aufgebracht werden. Da mit zunehmender Beschichtungskonzentration der Abgasgegendruck des Filters zunimmt und sich negativ auf die Leistung des Dieselmotors auswirkt, dessen Abgas mit dem Filter behandelt werden soll, beträgt die maximal aufzubringende Beschichtungskonzentration weniger als 75 g/l und besonders bevorzugt weniger als 50 g/l.

Diese Beschichtungskonzentrationen lassen sich mit allen drei Arten der Beschichtungszusammensetzung (Aufschlämmung feinteiliger Feststoffe, kolloide Lösung oder Lösung von Vorstufen der katalytisch aktiven Komponenten) erzielen. Im Falle der Aufschlämmung beträgt die Feststoffkonzentration der Beschichtungszusammensetzung 10 bis 20 Gew.-%. Die Viskosität liegt zwischen 0,01 und 0,5 Pa • s.

## Patentansprüche

1. Verfahren zum Beschichten eines Wandfluss-Partikelfilters mit einer Beschich-tungszusammensetzung, wobei das Partikelfilter aus einem offenporigen Material gefertigt ist, eine zylindrische Form mit der Länge L aufweist und von einer Eintrittsstirnfläche zu einer Austrittsstirnfläche eine Vielzahl von Strömungskanälen aufweist, die wechselseitig verschlossen sind,
**gekennzeichnet durch die Verfahrensschritte,**
a) senkrechtes Ausrichten der Strömungskanäle des Wandflussfilters, so dass eine Stirnfläche unten und die zweite Stirnfläche oben zu liegen kommt,
b) Eintauchen der unteren Stirnfläche des Wandflußfilters in eine vorgelegte Menge der Beschichtungszusammensetzung und
c) Anlegen eines Unterdrucks an die Öffnungen der Austrittskanäle in der oberen Stirnfläche und Einsaugen der gesamten Menge der Beschichtungszusammensetzung in die Ein- und Austrittskanäle durch die Öffnungen der Eintrittskanäle in der unteren Stirnfläche, wobei die Beschichtungszusammensetzung durch die porösen Kanalwände hindurch auch in die unten geschlossenen und oben offenen Strömungskanäle übertritt,
wobei die vorgelegte Menge der Beschichtungszusammensetzung entsprechend der gewünschten Beschichtungskonzentration und Beschichtungshöhe gewählt wird, die Beschichtungszusammensetzung Partikel mit einer mittleren Partikelgröße von unter 4 µm und das Wandflußfilter eine Porosität von 30 bis 95% mit einem mittleren Porendurchmessern zwischen 10 und 50 µm aufweist.

2. Verfahren nach Anspruch 1,
**dadurch gekennzeichnet,**
**dass** das Partikelfilter aus Cordierit, aus Siliciumcarbid oder aus Aluminiumtitanat gefertigt ist.

3. Verfahren nach Anspruch 1,
**dadurch gekennzeichnet,**
**dass** die definierte Menge der Beschichtungszusammensetzung in eine Schale mit flachem Boden gegeben wird, deren Durchmesser mindestens dem größten Querschnittsdurchmesser des Wandflußfilters entspricht und das Wandflußfilter so tief in die Beschichtungszusammensetzung eingetaucht wird, dass der verbleibende Spalt zwischen der unteren Stirnfläche und dem Boden der Schale zwischen 0,5 und 2 mm beträgt.

4. Verfahren nach Anspruch 1,
**dadurch gekennzeichnet,**
**dass** die dynamische Viskosität der Beschichtungszusammensetzung zwischen 0,01 und 0,5 Pa • s liegt.

5. Verfahren nach Anspruch 3, **dadurch gekennzeichnet,**
**dass** der an die obere Stirnfläche angelegte Unterdruck mit zunehmender Absaugzeit von einem niedrigen Wert beginnend erhöht wird.

6. Verfahren nach Anspruch 5, **dadurch gekennzeichnet,**
**dass** der Unterdruck zeitlich aufeinanderfolgend in zwei Stufen angelegt wird, wobei der Unterdruck in der zweiten Stufe höher als in der ersten Stufe ist.

7. Verfahren nach Anspruch 6, **dadurch gekennzeichnet,**
**dass** in der ersten Stufe der Unterdruck zwischen 100 und 200 Pa eingestellt und in der zweiten Stufe auf 500 bis 5000 Pa erhöht wird.

8. Verfahren nach Anspruch 7, **dadurch gekennzeichnet,**
**dass** der Unterdruck in der ersten Stufe für die Dauer von 1 bis 10 Sekunden und in der zweiten Stufe für die Dauer von 10 bis 50 Sekunden an die obere Stirnfläche des Wandflußfilters angelegt wird.

9. Verfahren nach Anspruch 1,
**dadurch gekennzeichnet,**
**dass** die Beschichtung abschließend bei erhöhter Temperatur getrocknet und danach bei einer Temperatur zwischen 300 und 600 °C calciniert wird.

10. Verfahren nach Anspruch 1,
**dadurch gekennzeichnet,**
**dass** es sich bei der Beschichtungszusammensetzung um eine Aufschlämmung feinteiliger Feststoffe handelt.

11. Verfahren nach Anspruch 10, **dadurch gekennzeichnet,**
**dass** die Beschichtungszusammensetzung als feinteilige Feststoffe pulverförmige Trägermaterialien mit einer spezifschen Oberfläche zwischen 10 und 400 m²/g und Partikelgrößen zwischen 2 und 50 µm enthält, auf denen katalytisch aktive Edelmetalle aus der Gruppe der Platingruppenmetalle aufgebracht sind.

12. Verfahren nach Anspruch 11, **dadurch gekennzeichnet,**
**dass** die Beschichtungszusammensetzung zusätzlich lösliche Vorstufen weiterer katalytisch aktiver Komponenten enthält.

13. Verfahren nach Anspruch 12, **dadurch gekennzeichnet,**
**dass** die Beschichtung abschließend bei erhöhter Temperatur getrocknet und danach bei einer Temperatur zwischen 300 und 600 °C calciniert wird, wobei die Vorstufen der katalytisch aktiven Komponenten in ihre endgültige Form überführt werden.

14. Verfahren nach Anspruch 7, **dadurch gekennzeichnet,**
**dass** die feinteiligen Feststoffe der Beschichtungszusammensetzung einen mittleren Partikeldurchmesser von weniger als 1 µm aufweisen.

15. Verfahren nach Anspruch 7, **dadurch gekennzeichnet,**
**dass** die feinteiligen Feststoffe der Beschichtungszusammensetzung eine mehrmodale Korngrößenverteilung mit wenigstens einem Maximum der Korngrößenverteilung unterhalb von 1 µm und einem zweiten Maximum oberhalb von 1 µm aufweisen.

16. Verfahren nach Anspruch 1,
**dadurch gekennzeichnet,**
**dass** es sich bei der Beschichtungszusammensetzung um eine wäßrige Lösung von Vorstufen der späteren Beschichtungsmaterialien handelt, die im Anschluß an die Beschichtung durch Trocknen und Calcinieren in die eigentlichen Beschichtungsmaterialien überführt werden.

## Claims

1. Method for coating a wall-flow particle filter with a coating composition, wherein the particle filter is made of an open-pored material, has a cylindrical shape with length L, and has a plurality of flow channels from an inlet end surface to an outlet end surface, said channels being closed off in alternating fashion,
**characterized by** the processing steps of
a) aligning the flow channels of the wall-flow filter in vertical fashion such that one end surface lies at the bottom, and the second end surface lies at the top,
b) dipping the lower end surface of the wall-flow filter into a prepared amount of the coating composition, and
c) applying a vacuum to the openings of the outlet channels in the upper end surface and drawing in the entire amount of the coating composition into the inlet and outlet channels through the openings of the inlet channels in the lower end surface, wherein the coating composition also passes through the porous channel walls into the lower closed flow channels and the upper open flow channels,
wherein the prepared amount of coating composition is selected according to the coating concentration and thickness desired, the coating composition has particles with an average particle size of less than 4 µm, and the wall-flow filter has a porosity of 30 to 95%, with an average pore diameter of between 10 and 50 µm.

2. Method according to claim 1,
**characterized in that**
the particle filter is made of cordierite, silicon carbide, or aluminum titanate.

3. Method according to claim 1,
**characterized in that**
the defined amount of coating composition is placed in a tray with a flat bottom, the tray diameter being at least as large as the largest cross-sectional diameter of the wall-flow filter, and the wall-flow filter being immersed deeply enough in the coating composition that the remaining gap between the lower end surface and the bottom of the tray is between 0.5 and 2 mm.

4. Method according to claim 1,
**characterized in that**
the dynamic viscosity of the coating composition is between 0.01 and 0.5 Pa • s.

5. Method according to claim 3,
**characterized in that**,
as the suction time increases, the vacuum applied to the upper end surface, beginning from a low value, is increased.

6. Method according to claim 5,
**characterized in that**
the vacuum is applied in two successive steps, wherein the vacuum in the second step is higher than in the first step.

7. Method according to claim 6,
**characterized in that**,
in the first step, the vacuum is adjusted to between 100 and 200 Pa and, in the second step, is raised to 500 to 5,000 Pa.

8. Method according to claim 7,
**characterized in that**
the vacuum, in the first step, is applied to the upper end surface of the wall-flow filter for a period of 1 to 10 seconds and, in the second step, is applied for a period of 10 to 50 seconds.

9. Method according to claim 1,
**characterized in that**
the coating is finally dried at elevated temperature and thereafter calcined at a temperature between 300 and 600 °C.

10. Method according to claim 1,
**characterized in that**
the coating composition is a slurry of fine-particulate solids.

11. Method according to claim 10,
**characterized in that**
the coating composition contains, as fine-particulate solids, powdered support materials with a specific surface area of between 10 and 400 m²/g and particle sizes between 2 and 50 µm, to which catalytically-active precious metals from the group of platinum group metals are applied.

12. Method according to claim 11,
**characterized in that**
the coating composition also contains soluble precursors of other catalytically-active components.

13. Method according to claim 12,
**characterized in that**
the coating is finally dried at elevated temperature and thereafter calcined at a temperature between 300 and 600 °C, wherein the precursors of the catalytically-active components transition to their final form.

14. Method according to claim 7,
**characterized in that**
the fine-particulate solids of the coating composition have an average particle diameter of less than 1 µm.

15. Method according to claim 7,
**characterized in that**
the fine-particulate solids of the coating composition have a multimodal grain size distribution with at least one grain size distribution maximum less than 1 µm and a second maximum greater than 1 µm.

16. Method according to claim 1,
**characterized in that**
the coating composition is an aqueous solution of precursors of the later coating materials, which, following the coating, are converted to the actual coating materials by drying and calcining.

## Revendications

1. Procédé de revêtement d'un filtre à particules à écoulement à travers les parois avec une composition de revêtement, dans lequel le filtre à particules est fabriqué à partir d'un matériau à pores ouverts, présente une forme cylindrique de longueur L et présente, depuis une face d'extrémité d'entrée jusqu'à une face d'extrémité de sortie, une pluralité de canaux d'écoulement, qui sont mutuellement fermés,
**caractérisé par** les étapes de procédé,
a) orientation verticale des canaux d'écoulement du filtre à écoulement à travers les parois, de sorte qu'une face d'extrémité soit en dessous et que la deuxième face d'extrémité soit au-dessus,
b) immersion de la face d'extrémité inférieure du filtre à écoulement à travers les parois dans une quantité prédéfinie de la composition de revêtement et
c) application d'une pression négative sur les ouvertures des canaux de sortie dans la face d'extrémité supérieure et aspiration de la quantité totale de la composition de revêtement dans les canaux d'entrée et de sortie à travers les ouvertures des canaux d'entrée dans la face d'extrémité inférieure, dans lequel la composition de revêtement déborde à travers les parois de canaux poreuses également dans les canaux d'écoulement inférieurs fermés et supérieurs ouverts,
dans lequel la quantité prédéfinie de la composition de revêtement est choisie de manière correspondant à la concentration de revêtement et la hauteur de revêtement souhaitées, la composition de revêtement présentant des particules avec une taille de particule moyenne inférieure à 4 µm et le filtre à écoulement à travers les parois présentant une porosité de 30 à 95 % avec un diamètre de pores moyen compris entre 10 et 50 µm.

2. Procédé selon la revendication 1,
**caractérisé en ce que**
le filtre à particules est fabriqué à partir de cordiérite, de carbure de silicium ou de titanate d'aluminium.

3. Procédé selon la revendication 1,
**caractérisé en ce que**
la quantité définie de la composition de revêtement est remplie dans un bac avec un fond plat, dont le diamètre correspond au moins au plus gros diamètre transversal du filtre à écoulement à travers les parois et le filtre à écoulement à travers les parois est immergé dans la composition de revêtement de manière si profonde que la fente restant entre la face d'extrémité inférieure et le fond du bac est comprise entre 0,5 et 2 mm.

4. Procédé selon la revendication 1,
**caractérisé en ce que**
la viscosité dynamique de la composition de revêtement est située entre 0,01 et 0,5 Pa·s.

5. Procédé selon la revendication 3,
**caractérisé en ce que**
la pression négative appliquée sur la face d'extrémité supérieure est élevée à partir d'une valeur faible à mesure que la durée d'aspiration augmente.

6. Procédé selon la revendication 5,
**caractérisé en ce que**
la pression négative est appliquée en deux étapes successives dans le temps, la pression négative dans la deuxième étape étant supérieure à celle de la première étape.

7. Procédé selon la revendication 6,
**caractérisé en ce que**
dans la première étape, la pression négative est réglée entre 100 et 200 Pa et augmentée dans la deuxième étape entre 500 et 5000 Pa.

8. Procédé selon la revendication 7,
**caractérisé en ce que**
la pression négative dans la première étape est appliquée pendant une durée de 1 à 10 secondes et dans la deuxième étape pendant une durée de 10 à 50 secondes sur la face d'extrémité supérieure du filtre à écoulement à travers les parois.

9. Procédé selon la revendication 1,
**caractérisé en ce que**
le revêtement est ensuite séché à une température accrue, puis calciné à une température comprise entre 300 et 600 °C.

10. Procédé selon la revendication 1,
**caractérisé en ce que**
la composition de revêtement se compose d'une bouillie de substances solides en particules fines.

11. Procédé selon la revendication 10,
**caractérisé en ce que**
la composition de revêtement contient, en guise de substances solides en particules fines, des matériaux de support pulvérulents avec une surface spécifique entre 10 et 400 m²/g et une taille de particules entre 2 et 50 µm, sur lesquels est appliqué des métaux nobles à action catalytique du groupe des métaux du groupe platine.

12. Procédé selon la revendication 11,
**caractérisé en ce que**
la composition de revêtement contient de plus des précurseurs solubles d'autres composants à action catalytique.

13. Procédé selon la revendication 12,
**caractérisé en ce que**
le revêtement est ensuite séché à une température accrue, puis calciné à une température entre 300 et 600 °C, les précurseurs des composants à action catalytique étant transformés en leur forme définitive.

14. Procédé selon la revendication 7,
**caractérisé en ce que**
les substances solides en particules fines de la composition de revêtement présentent un diamètre de particules moyen inférieur à 1 µm.

15. Procédé selon la revendication 7,
**caractérisé en ce que**
les substances solides en particules fines de la composition de revêtement présentent une répartition granulométrique multimodale avec au moins un maximum de la répartition granulométrique inférieur à 1 µm et un deuxième maximum supérieur à 1 µm.

16. Procédé selon la revendication 1,
**caractérisé en ce que**
la composition de revêtement se compose d'une solution aqueuse de précurseurs des matériaux de revêtement ultérieurs, qui sont transformés, à la suite du revêtement, par séchage et calcination, en les matériaux de revêtement proprement dits.
